# EUROPÄISCHE PATENTSCHRIFT

(11) **EP 0 936 105 B1**
(45) Veröffentlichungstag und Bekanntmachung des Hinweises auf die Patenterteilung: **29.03.2006**
(21) Anmeldenummer: 99100675.0
(22) Anmeldetag: 15.01.1999
(51) Int. Cl.: B60N 2/44, A47C 7/74

(54) **Polster für Sitzteil und/oder Rückenlehne eines Fahrzeugsitzes**
Padding for cushion and/or backrest of a vehicle
Rembourrage pour assise et/ou dossier d'un siège de véhicule

(30) Priorität: 10.02.1998 DE 19805178
(43) Veröffentlichungstag der Anmeldung: 18.08.1999
(73) Patentinhaber: DaimlerChrysler AG, 70567 Stuttgart (DE)
(72) Erfinder: Faust, Eberhard, 70597 Stuttgart (DE); Pfahler, Karl Dr., 70180 Stuttgart (DE)

(56) Entgegenhaltungen:
- DE-A- 4 200 825
- DE-C- 19 628 698
- FR-A- 2 641 956

## Beschreibung

Die Erfindung betrifft ein Polster für Sitzteil und/oder Rückenlehne eines Fahrzeugs gemäß dem Oberbegriff des Patentanspruchs 1.

Bei einem bekannten Polster dieser Art (DE 42 00 825 A1) sind die Abstandsstege oder -fäden in einer Richtung parallel zueinander beabstandet, wodurch sich dazwischenliegende Hohlräume mit einem gleichbleibenden Querschnitt ergeben, durch die hindurch Luft aus einer Heizung, einer Klimaanlage oder eines eigens dafür vorgesehenen Gebläses gefördert wird. Die die Ventilationsschicht durchströmende Luft erzeugt einen Temperatur- und Feuchtigkeitsgradienten, durch welchen der durch Transpiration entstehende Wasserdampf oder Schweiß von der Polsteroberfläche abgeführt und dadurch das Mikroklima auf der Polsteroberfläche deutlich verbessert wird.

Bei einem ebenfalls bekannten Polster für Fahrzeugsitze der eingangs genannten Art (DE 196 28 698 C1) ist in dem Polster eine Mehrzahl von Miniaturlüftern integriert, die über die Polsterfläche verteilt angeordnet sind und Luft aus dem Bereich unterhalb des Fahrzeugsitzes in die z.B. aus einem Äbstandsgewirk bestehende Ventilationsschicht einblasen. Die Ventilationsluft strömt bei unbesetztem Sitz durch die luftdurchlässige Polsteroberfläche hindurch und kühlt die z.B. beim Parken in der Sonne stark aufgeheizten Polsteroberfläche relativ schnell auf komfortable Temperaturen herab. Bei besetztem Sitz strömt die Luft im Polster parallel zur Polsteroberfläche, lädt sich mit Transpirationsfeuchtigkeit auf und verläßt das Polster erst am Polsterende, ggf. durch gesonderte, konstruktiv vorgesehene Entlüftungslöcher im Polster.

Der Erfindung liegt die Aufgabe zugrunde, bei einem Polster der eingangs genannten Art eine intensive Belüftung der gesamten, dem Sitzbenutzer angebotenen Polsterfläche sicherzustellen, und zwar auch bei für die Belüftung zur Verfügung stehender beschränkter Lüfterleistung.

Die Aufgabe ist bei einem Polster der im Oberbegriff des Patentanspruchs 1 definierten Gattung erfindungsgemäß durch die Merkmale im Kennzeichenteil des Patentanspruchs 1 gelöst.

Das erfindungsgemäße Polster für Sitzteil und/oder Rückenlehne eines Fahrzeugsitzes hat den Vorteil, daß durch die unterschiedliche Dichte der voneinander beabstandeten Abstandsstege oder -fäden in zueinander rechtwinkligen Polsterdimensionen, die von den Ventilatoren oder Lüftern her über lokal begrenzte Teilflächen in die Ventilationsschicht einströmende Luft gleichmäßig in Querrichtung über die gesamte Polsterfläche verteilt wird, bevor sie in Polsterlängsrichtung weiterströmt. Damit wird die Luft gleichmäßig über die Polsterfläche verteilt und mit geringem Energieverbrauch eine optimale Sitzbelüftung erreicht.

Zweckmäßige Ausführungsformen des erfindungsgemäßen Polsters mit vorteilhaften Weiterbildungen und Verbesserungen der Erfindung sind in den weiteren Patentansprüchen angegeben.

Gemäß einer bevorzugten Ausführungsform der Erfindung sind in der Ventilationsschicht lamellenartige Luftleitelemente angeordnet, die zur Luftablenkung zur Oberschicht der Ventilationsschicht hin in Richtung Oberschicht leitschaufelartig schräg angestellt sind. Durch diese Struktur der Ventilationsschicht wird der sie durchströmenden Luft eine Bewegungskomponente in Richtung auf die Polsteroberfläche verliehen, so daß bei nichtbesetztem Sitz die Luft vorzugsweise durch den die Polsteroberfläche überspannenden, luftdurchlässigen Polsterbezug geblasen wird, was zu einer raschen Abkühlung der z.B. durch Sonneneinstrahlung aufgeheizten Polsteroberfläche führt.

Die Erfindung ist anhand von in der Zeichnung dargestellten Ausführungsbeispielen im folgenden näher beschrieben. Es zeigen jeweils in schematischer Darstellung:
- Fig. 1: eine Draufsicht eines Polsters für ein Sitzteil eines Kraftfahrzeugs, teilweise aufgeschnitten,
- Fig. 2: ausschnittweise einen Schnitt längs der Linie II-II in Fig. 1,
- Fig. 3: ausschnittweise einen Schnitt längs der Linie III-III in Fig. 1,
- Fig. 4: ausschnittweise eine Draufsicht auf eine Ventilationsschicht des Polsters in Fig. 1 - 3,
- Fig. 5: eine gleiche Darstellung wie in Fig. 2 eines modifizierten Polsters.

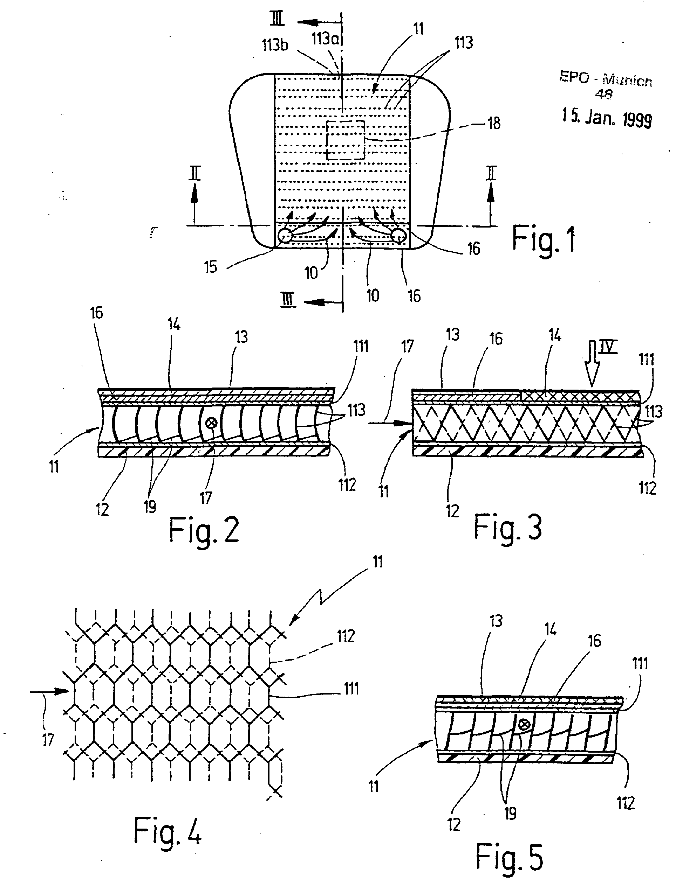

Das in Fig. 1 in Draufsicht und im Sitzspiegelbereich geschnitten dargestellte Polster für ein Sitzteil eines Fahrzeugsitzes, das in gleicher Weise auch für die Rückenlehne des Fahrzeugsitzes verwendet werden kann, umfaßt eine luftdurchflutbare Ventilationsschicht 11 z.B. aus einem grobmaschigen Abstandsgewirk, eine luftundurchlässige Druckverteilungsschicht 12 aus Vlies oder Gummihaarmaterial hoher Dichte, einen die von der Druckverteilungsschicht 12 abgekehrte Polsteroberfläche überspannenden, luftdurchlässigen Polsterbezug 13 aus Textilstoff oder perforiertem Leder oder Kunstleder und eine zwischen Ventilationsschicht 11 und Polsterbezug 13 eingelegte Bezugsfüllung 14 aus Polsterwatte, Wollvlies oder einem offenporigem oder zumindest teilweise perforiertem Schaumstoff oder aus einer Watte-Schaum-Kombination. An dem der Rückenlehne zugekehrten hinteren Polsterbereich wird mittels zweier in Fig. 1 schematisch angedeuteter Lüfter oder Ventilatoren 15 von unten her Luft in die Ventilationsschicht 11 eingeblasen, wozu die luftundurchlässige Druckverteilungsschicht 12 mit den Ausblasöffnungen der Ventilatoren 15 kongruente Aussparungen aufweist. Im Bereich der Lufteinleitung ist die von der Druckverteilungsschicht 12 abgekehrte Oberseite der Ventilationsschicht 11 mit einer luftundurchlässigen Sperrschicht 16, z.B. einer Folie, abgedeckt, die dafür sorgt, daß die Luft nicht direkt durch die Polsteroberfläche hindurch entweichen kann, sondern zunächst in Richtung der Oberflächentangente gelenkt wird.

Wie in den Schnittdarstellungen der Fig. 2 und 3 zu sehen ist, besteht die ventilationsschicht 11 aus einer luft- und wasserdurchlässigen Oberschicht 111, einer luft- und wasserdurchlässigen Unterschicht 112 und aus einer Vielzahl von elastisch biegbaren und voneinander beabstandeten Abstandsstegen- oder fäden 13, die die Oberschicht 111 und die Unterschicht 112 auf Abstand halten und miteinander verbinden. Die in Fig. 1 durch Punkte angedeuteten Abstandsstege oder -fäden 113 sind so angeordnet, daß ihre Dichte, d.h. ihre Anzahl pro Flächeneinheit, in Polsterlängsrichtung größer gewählt ist als in Polsterbreite. Dadurch verteilt sich die am hinteren Ende des Polsters einströmende Luft über die gesamte Polsterbreite, bevor sie auf breiter Front in Längsrichtung unter der Polsteroberfläche entlangströmt. Die Luftströmung ist in Fig. 1 mit Pfeilen 10 symbolisiert, und die Luftströmung in Längsrichtung des Polsters, also beim Sitzpolster längs der Sitztiefe und im Lehnenpolster längs der Lehnenhöhe, ist in Fig. 2 - 5 durch Pfeil 17 angedeutet. Die unterschiedliche Dichte der Abstandsstege oder -fäden 113 ist anhand des in Fig. 1 strichliniert eingezeichneten Quadrates 18 ohneweiteres erkennbar. Die Luftdurchtrittsfläche für die in Längsrichtung des Polsters strömende Luft umfaßt im Quadrat zehn etwa senkrecht zur Zeichenblattebene verlaufende Abstandsstege oder -fäden 113, während die gleich große Luftdurchtrittsfläche für die in Richtung Polsterbreite strömende Luft im Quadrat 18 lediglich vier Abstandsstege oder -fäden 113 aufweist. Der Strömungswiderstand der Ventilationsschicht 11 in Längsrichtung des Polsters ist daher größer als der Strömungwiderstand der Ventilationsschicht 11 in Richtung Sitzbreite.

Bei der als Abstandsgewirk ausgeführten Ventilationsschicht 11 kann, wie dies in Fig. 4 ausschnittweise dargestellt ist, die Oberschicht 111 und die Unterschicht 112 eine Wabenstruktur aufweisen. Jeder in Fig. 2 und 3 dargestellte Abstandssteg oder -faden 113 setzt sich dann aus einem Bündel von Fasern zusammen, die in die Wabenstege von Oberschicht 111 und Unterschicht 112 eingeknüpft sind. Die Abstandsstege oder - fäden 113 stehen dabei in Schußrichtung dichter als in Kettenrichtung, so daß das Abstandsgewirk im Polster so ausgerichtet ist, daß seine Schußrichtung in Längsrichtung des Polsters verläuft. Die Durchströmungsrichtung des Abstandsgewirks vom hinteren, die Lüfter 15 enthaltenden Polsterbereich zum vorderen Polsterrand ist in Fig. 4 wiederum mit Pfeil 17 kenntlich gemacht. Zur Unterscheidung von Oberschicht 111 und Unterschicht 112 ist in Fig. 4 die versetzt angeordnete Unterschicht 112 strichliniert dargestellt. In gleicher Weise sind in Fig. 3 ausschließlich zum Zwecke der Unterscheidung die in der vorderen Reihe 113a (Fig. 1) liegenden Abstandsstege oder -fäden 113 ausgezogen und die in der benachbarten hinteren Stegreihe 113b (Fig. 1) liegenden Abstandsstege oder -fäden 113 strichliniert dargestellt. Auf die Darstellung der Abstandsstege oder -fäden 113 ist in Fig. 4 der Übersichtlichkeit halber verzichtet.

Zur Verbesserung der Durchlüftung der Polsteroberfläche bei unbesetztem Fahrzeugsitz zwecks schnellerer Abkühlung der z.B. durch Sonneneinstrahlung erhitzten Polsteroberfläche, sind in der Ventilationsschicht 11 lamellenartige Luftleitelemente 19 angeordnet, die zur Luftablenkung zur Polsteroberfläche hin in Richtung Oberschicht 111 der Ventilationsschicht 11 leitschaufelartig schräg angestellt sind. Die Schräganstellung kann dabei sowohl in Richtung Polsterbreite als auch in Längsrichtung des Polsters oder in beiden Richtungen erfolgen. In dem Ausführungsbeispiel der Fig. 2 sind die Luftleitelemente 19 unmittelbar an der Unterschicht 112 angeordnet. In dem Ausführungsbeispiel der Fig. 5 sind die Luftleitelemente 19 etwas unterhalb der Mitte der Abstandsstege oder -fäden 113 angeordnet. Im Ausführungsbeispiel der Fig. 5 sind die Abstandsstege oder -fäden 113 linear ausgeführt und leicht schräggestellt, während sie bei dem Ausführungsbeispiel der Fig. 2 leicht bogenförmig gekrümmt sind. In beiden Fällen sind die Abstandsstege oder -fäden 113 elastisch biegbar, so daß sie bei Belastung der Polsteroberfläche leicht einfedern, doch sind sie nicht soweit durchbiegbar, daß sich Oberschicht 111 und Unterschicht 112 abstandslos berühren können.

## Patentansprüche

1. Polster für Sitzteil und/oder Rückenlehne eines Fahrzeugsitzes mit einer luftdurchflutbaren Ventilationsschicht (11), die aus einer luft- und wasserdurchlässigen Ober- und Unterschicht (111,112) und aus diese auf Abstand haltende und miteinander verbindende, elastisch biegbare, voneinander beabstandete Abstandsstege oder -fäden (113) besteht, und mit Lüftern oder Ventilatoren (15) zum Einblasen von Luft in die Ventilationsschicht (11),
**dadurch gekennzeichnet,**
**daß** die Dichte der Abstandsstege oder -fäden (113) in Polsterlängsrichtung größer gewählt ist als in Polsterbreite.

2. Polster nach Anspruch 1,
**dadurch gekennzeichnet,**
**daß** die Ventilationsschicht (11) aus einem Abstandsgewirk besteht, das in Schußrichtung einer größere Dichte aufweist als in Kettrichtung, und daß das Abstandsgewirk im Polster so ausgerichtet ist, daß die Schußrichtung in Sitztiefe des Sitzteils und/oder in Lehnenhöhe der Rückenlehne verläuft.

3. Polster nach Anspruch 1 oder 2,
**dadurch gekennzeichnet,**
**daß** in der Ventilationsschicht (11) lamellenartige Luftleitelemente (19) angeordnet sind, die zur Luftablenkung zur Polsteroberfläche hin in Richtung Oberschicht (111) leitschaufelartig schräg angestellt sind.

4. Polster nach Anspruch 3,
**dadurch gekennzeichnet,**
**daß** die Luftleitlamellen (19) zwischen den Abstandsstegen oder -fäden (113) angeordnet sind und ihre Anschrägung in Polsterbreite und/oder Polsterlängsrichtung weist.

5. Polster nach Anspruch 3 oder 4,
**dadurch gekennzeichnet,**
**daß** die Luftleitelemente (19) unmittelbar an der Unterschicht (112) angeordnet sind.

6. Polster nach Anspruch 3 oder 4,
**dadurch gekennzeichnet,**
**daß** die Luftleitelemente (19) in oder unterhalb der Mitte der Abstandsstege oder -fäden (113) angeordnet sind.

7. Polster nach einem der Ansprüche 1 - 6,
**dadurch gekennzeichnet,**
**daß** die Lufteinleitung in die Ventilationsschicht (11) an der Unterschicht (112) vorgenommen ist und daß der dem Bereich der Lufteinleitung gegenüberliegende Bereich der Oberschicht (111) mit einer luftundurchlässigen Sperrschicht (16) abgedeckt ist.

8. Polster nach einem der Ansprüche 2 - 7,
**dadurch gekennzeichnet,**
**daß** Ober- und Unterschicht (111,112) jeweils Wabenstruktur aufweisen.

## Revendications

1. Rembourrage pour l'assise et/ou le dossier d'un siège de véhicule avec une couche de ventilation (11) pouvant être traversée par de l'air, qui est composée d'une couche supérieure et d'une couche inférieure (111, 112) perméable à l'air et à l'eau et de listels ou de fils d'écartement (113) élastiquement flexibles, distancés entre eux et maintenant ces dernières à distance et les reliant entre elles, et avec des soufflantes ou des ventilateurs (15) pour souffler de l'air dans la couche de ventilation (11), **caractérisé en ce que** la densité des listels ou des fils d'écartement (113) est choisie de façon à être plus importante en direction longitudinale du rembourrage que dans la largeur du rembourrage.

2. Rembourrage selon la revendication 1, **caractérisé en ce que** la couche de ventilation (11) est composée d'un maillage d'écartement qui en direction de la trame présente une densité supérieure qu'en direction de la chaîne et **en ce que** le maillage d'écartement est orienté dans le rembourrage de façon à ce que la direction de la trame s'étende en profondeur dans l'assise et/ou en hauteur dans le dossier.

3. Rembourrage selon la revendication 1 ou 2, **caractérisé en ce que** des éléments conducteurs d'air (19) du type de lamelles, qui pour dévier l'air vers la surface du rembourrage sont mis en prise inclinée en direction de la couche supérieure (111) à la manière d'aubes directrices sont disposés dans la couche de ventilation (11).

4. Rembourrage selon la revendication 3, **caractérisé en ce que** les lamelles conductrices d'air (19) sont disposées entre les listels ou les fils d'écartement (113) et **en ce que** leur inclinaison est dirigée dans la largeur du rembourrage et/ou en direction longitudinale du rembourrage.

5. Rembourrage selon la revendication 3 ou 4, **caractérisé en ce que** les éléments conducteurs d'air (19) sont disposés directement sur la couche inférieure (112).

6. Rembourrage selon la revendication 3 ou 4, **caractérisé en ce que** les éléments conducteurs d'air (19) sont disposés au centre ou sous le centre des listels ou des fils d'écartement (113).

7. Rembourrage selon l'une quelconque des revendications 1 à 6, **caractérisé en ce que** l'introduction de l'air dans la couche de ventilation (11) est assurée sur la couche inférieure (112) et **en ce que** la zone de la couche supérieure (111) qui est opposée à la zone d'introduction d'air est recouverte d'une couche de barrage (16) imperméable à l'air.

8. Rembourrage selon l'une quelconque des revendications 2 à 7, **caractérisé en ce que** la couche supérieure et la couche inférieure (111, 112) présentent chacune une structure alvéolée.

## Claims

1. Cushion for a seat part and/or back rest of a vehicle seat with an air-permeable ventilation layer (11) comprising an air-permeable and water-permeable top and bottom layer (111, 112) and mutually spaced, elastically flexible spacing webs or threads (113) holding the latter at a distance apart and connecting them to one another, and having fans or ventilators (15) for blowing air into the ventilation layer (11),
**characterised in that**
the density of the spacing webs or threads (113) is selected so as to be higher in the cushion longitudinal direction than in the cushion width.

2. Cushion as claimed in claim 1,
**characterised in that**
the ventilation layer (11) is made from a knitted spacing fabric with a higher density in the weft direction than in the warp direction and the knitted spacing fabric is oriented in the cushion so that the weft direction extends through the seat depth of the seat part and/or through the rest height of the back rest.

3. Cushion as claimed in claim 1 or 2,
**characterised in that**
lamella-type air guide elements (19) are provided in the ventilation layer (11), which are disposed at an angle in the manner of guide vanes in order to deflect the air towards the cushion top surface in the direction of the top layer (111).

4. Cushion as claimed in claim 3,
**characterised in that**
the air guide lamella (19) are disposed between the spacing webs or threads (113) and their angular orientation is directed towards the cushion width and/or cushion longitudinal direction.

5. Cushion as claimed in claim 3 or 4,
**characterised in that**
the air guide elements (19) are disposed directly on the bottom layer (112).

6. Cushion as claimed in claim 3 or 4,
**characterised in that**
the air guide elements (19) are disposed in or underneath the middle of the spacing webs or threads (113).

7. Cushion as claimed in one of claims 1 - 6,
**characterised in that**
air is introduced into the ventilation layer (11) from the bottom layer (112) and the region of the top layer (111) lying opposite the region where air is introduced is covered with an air-impermeable barrier layer (16).

8. Cushion as claimed in one of claims 2 - 7,
**characterised in that**
the top and bottom layer (111, 112) respectively have a honeycomb structure.
